# EUROPÄISCHE PATENTANMELDUNG

(11) **EP 1 811 288 A2**
(43) Veröffentlichungstag der Anmeldung: **25.07.2007**
(21) Anmeldenummer: 06024678.2
(22) Anmeldetag: 29.11.2006
(51) Int. Cl.: G01N 21/90

(54) **Vorrichtung und Verfahren zum Inspizieren von Gefässverschlüssen**

(30) Priorität: 21.12.2005 DE 102005061087
(71) Anmelder: KRONES AG, 93073 Neutraubling (DE)
(72) Erfinder: Schober, Stefan, 93105 Tegernheim (DE)

(57) **Zusammenfassung**

Eine Vorrichtung zum Inspizieren von Gefäßen (8), insbesondere von Flaschenverschlüssen (9), mit wenigstens einer Beleuchtungseinrichtung (6a, 6b, 6c, 6d, 6e, 6f), die Strahlung auf ein zu inspizierendes Gefäß (8) ausgibt und einer Beobachtungseinrichtung (3a, 3b), die wenigstens einen Bereich des zu untersuchenden Gefäßes abbildet. Dabei ist die Beobachtungseinrichtung (3a , 3b) zumindest auf einen oberen Bereich des Gefäßes (8) gerichtet und ein Strahlengang (La, Lb, Ra, Rb) der von dem Gefäß zu der Beobachtungseinrichtung (3a, 3b) gelangenden Strahlung verläuft wenigstens abschnittsweise in einer Ebene, die zu einer Längsrichtung des Gefäßes (8) im Wesentlichen senkrecht steht.

## Beschreibung

Die vorliegende Erfindung bezieht sich auf eine Vorrichtung und ein Verfahren zum Inspizieren von Gefäßverschlüssen. Die Erfindung wird unter Bezugnahme auf eine Vorrichtung zum Untersuchen von Bügelverschlüssen für Flaschen beschrieben. Es wird jedoch darauf hingewiesen, dass die Erfindung auch bei anderen Arten von Gefäßen oder Gefäßverschlüssen Anwendung finden kann.

Mehrwegflaschen mit Bügelverschlüssen erfreuen sich in jüngerer Zeit wieder verstärkter Beliebtheit. Diese Bügelverschlüsse sind mehrfach an den jeweiligen Flaschen verwendbar. Dabei ist es jedoch erforderlich, die Bügelverschlüsse bzw. deren flaschenabdichtende Elemente vor jeder Wiederbefüllung zu überprüfen. Insbesondere sollten die Verschlussgummis der Bügelverschlüsse und auch der Porzellan- und oder Kunststoffkörper an der dem Flascheninneren zugewandten Seite überprüft werden. Aus DE 42 11 660 C2 ist eine Bügelflascheninspektionsmaschine bekannt. Diese Inspektionsmaschine weist Drehteller auf, auf denen die Flaschen angeordnet sind, um durch eine Drehung der Flaschen einen seitlich am Flaschenhals anliegenden Bügelverschluss in eine bestimmte Richtung auszurichten. Diese Vorrichtung ist jedoch relativ aufwändig und damit in ihrer Herstellung teuer.

Daneben ist aus dem Stand der Technik eine Inspektionsmaschine bekannt, bei der die Flaschen ebenfalls auf Drehtellern angeordnet sind und diese Drehteller eine schnelle Rotation der Flasche bewirken, wodurch sich der Porzellankörper der Verschlüsse aufgrund der Fliehkraft mit seiner Dichtfläche nach außen wendet und sich anschließend ausrichtet.

Auch diese Vorrichtung ist jedoch aufgrund der servomotorgesteuerten Drehteller sehr aufwändig.

Aus WO 98/19150 ist eine Inspektionsvorrichtung für Flaschen oder dergleichen bekannt. Bei dieser Vorrichtung wird eine Lichtquelle vorgesehen sowie eine Kamera, welche eine Flasche von oben, d. h. in Längsrichtung beobachtet. Dazu wird ein optischer Körper eingesetzt, der eine so gestaltete Kontur aufweist, dass ein von der beleuchtenden, abzubildenden Flasche kommender Strahlengang auf dem Weg zu der Kamera beim Durchtritt durch den optischen Körper mehrfach mittels Totalreflexion innerhalb des optischen Körpers umgelenkt wird und eine vollumfängliche Flaschenmantelabbildung liefert. Ein in der Abbildung enthaltener Bügelverschlusskörper kann dabei jedoch stark verzerrt wiedergegeben sein, was eine brauchbare Bildauswertung erschwert.

Der vorliegenden Erfindung liegt daher die Aufgabe zugrunde, eine Vorrichtung zum Inspizieren von Gefäßverschlüssen zur Verfügung zu stellen, die gegenüber dem Stand der Technik weniger aufwändig und daher kostengünstiger herzustellen ist.

Dies wird erfindungsgemäß durch eine Vorrichtung nach Anspruch 1 erreicht. Vorteilhafte Ausführungsformen und Weiterbildungen sind Gegenstand der Unteransprüche.

Die erfindungsgemäße Vorrichtung zum Inspizieren von Gefäßen und insbesondere von Flaschenverschlüssen weist wenigstens eine Beleuchtungseinrichtung auf, die Strahlung auf wenigstens ein zu inspizierendes Gefäß ausgibt. Daneben ist eine Beobachtungseinrichtung vorgesehen, die wenigstens einen Bereich des zu untersuchenden Gefäßes abbildet. Erfindungsgemäß ist die Beobachtungseinrichtung wenigstens auf einen oberen Bereich des Gefäßes gerichtet und ein Strahlengang, der von dem Gefäß zu der Beobachtungseinrichtung gelangt, verläuft wenigstens abschnittsweise in einer Ebene, die zu einer Längsrichtung des Gefäßes im Wesentlichen senkrecht steht.

Unter der Längsrichtung des Gefäßes wird diejenige Richtung verstanden, die vom Boden des Gefäßes zur Mündung bzw. Öffnung des Gefäßes verläuft. Dabei werden unter im Wesentlichen senkrecht auch solche Winkel verstanden, bei denen die Längsrichtung und die Ebene Winkel von mehr als 60° und bevorzugt von mehr als 75° einschließen.

Unter dem oberen Bereich des Gefäßes, welches im Folgenden auch als Flasche bezeichnet wird, wird ein Bereich verstanden, der oberhalb der halben Höhe des Gefäßes liegt. Vorzugsweise handelt es sich bei dem oberen Bereich um einen Flaschenhals der zu inspizierenden Flasche, an dessen Außenrand der Bügelverschluss anliegt.

Vorzugsweise sind die Beobachtungseinrichtung und der Gefäßverschluss im Wesentlichen auf der gleichen Höhe angeordnet. Vorteilhaft verläuft ein überwiegender Anteil des Strahlengangs und besonders bevorzugt der gesamte Strahlengang in der Ebene, auf der die Längsrichtung des Gefäßes senkrecht steht.

Durch die erfindungsgemäße Anordnung der Beobachtungseinrichtung bzw. den erfindungsgemäßen Verlauf des Strahlengangs ist eine besonders einfache Beobachtung der Bügelverschlüsse, die im geöffneten Zustand am Flaschenhals des Gefäßes anliegen, möglich.

Bei einer bevorzugten Ausführungsform ist eine Transporteinrichtung vorgesehen, welche eine Vielzahl von Gefäßen gegenüber der Beobachtungseinrichtung bewegt.

Vorzugsweise bewegt die Transporteinrichtung die Gefäße im Wesentlichen geradlinig. Insbesondere werden die Gefäße im Bereich der Beobachtungseinrichtung im Wesentlichen geradlinig bewegt.

Bei einer vorteilhaften Ausführungsform weist die Vorrichtung eine Ausrichteinrichtung auf, welche wenigstens einen Gefäßverschluss gegenüber dem zugehörigen Gefäß bewegt, insbesondere um seine horizontale Bügelschwenkachse. Wie oben erwähnt, liegt derjenige Bereich der Gefäßverschlüsse, der den Dichtungsring aufweist, d. h. der Bügelverschlusskopf, am Außenumfang der Flasche an. Dabei kann es jedoch vorkommen, dass der Dichtgummi der Flasche zugewandt ist und damit von der Beobachtungseinrichtung nicht optimal beobachtet werden kann. Zu diesem Zweck ist die Ausrichteinrichtung vorgesehen, welche den Gefäßverschluss gegenüber dem Gefäß, d. h. der Flasche bewegt. Durch diese Bewegung des Verschlusses gegenüber dem Gefäß kann erreicht werden, dass aufgrund der Massenverhältnisse des Verschlusskopfes dieser so ausgerichtet wird, dass der Dichtgummi radial nach außen weist und damit von der Beobachtungseinrichtung besser beobachtbar ist.

Bei einer bevorzugten Ausführungsform bewegt die Ausrichteinrichtung das Gefäß, d. h. die Bewegung des Gefäßes gegenüber dem Verschluss wird durch eine Bewegung des Gefäßes erreicht. Besonders bevorzugt bewegt die Ausrichteinrichtung das Gefäß im Wesentlichen in einer Richtung, die senkrecht zu der Längsrichtung des Gefäßes und besonders bevorzugt auch senkrecht zu der Transportrichtung der Gefäße ist. Daher kann es sich beispielsweise um einen seitlicher Stoß auf das Gefäß handeln, durch den der Kopf des Bügelverschlusses kurzzeitig von dem Gefäß weg beschleunigt wird und sich auf diese Weise ausrichten kann. Auch ist es möglich, dass die Transportrichtung einen gekrümmten Abschnitt aufweist, sodass die Gefäße in eine Richtung beschleunigt werden, die auch eine Komponente senkrecht zu der Transportrichtung aufweist. Damit bewegt die Ausrichteinrichtung bevorzugt das Gefäß stoßartig.

Bei einer weiteren vorteilhaften Ausführungsform bewegt die Ausrichteinrichtung den Gefäßverschluss. So ist es beispielsweise möglich, dass die Ausrichteinrichtung den Gefäßverschluss oder Teile davon kurzzeitig anhebt und auf diese Weise eine Ausrichtung der Verschlussköpfe erreicht. Auch kann eine Kombination mehrerer gegebenenfalls auch unterschiedlicher Ausrichteinrichtungen eingesetzt werden.

Vorzugsweise ist die Ausrichteinrichtung in einem Bereich der Transporteinrichtung angeordnet, der von der Beobachtungseinrichtung nicht erfasst wird. Besonders vorteilhaft wird die Ausrichteinrichtung in Transportrichtung vor dem von der Beobachtungseinrichtung erfassbaren Bereich angeordnet.

Bei einer weiteren bevorzugten Ausführungsform gibt die Beleuchtungseinrichtung polarisiertes Licht ab. Besonders bevorzugt handelt es sich dabei um lineares polarisiertes Licht. Dabei ist in einer weiteren bevorzugten Ausführungsform in dem Strahlengang zwischen dem zu beobachtenden Gefäß und der Beobachtungseinrichtung wenigstens ein Polarisationsfilter angeordnet. Auf diese Weise kann beispielsweise lineares polarisiertes Licht in einer vertikalen Polarisationsebene erzeugt werden und vor der Beobachtungseinrichtung ein Polarisationsfilter angeordnet werden, das nur senkrecht hierzu polarisiertes Licht, d.h. in diesem Fall horizontal polarisiertes Licht transmittiert.

Auf diese Weise kann vermieden werden, dass Licht direkt von den Beleuchtungseinrichtungen in die Beobachtungseinrichtung gelangt. Auch kann durch die Vorgehensweise verhindert werden, dass durch die Beobachtungseinrichtung Reflexlicht aufgenommen wird. Es gelangen damit lediglich diffuse Lichtanteile von dem zu prüfenden Gefäß bzw. dessen Verschluss zur Abbildung in die Beobachtungseinrichtung.

Von Vorteil ist eine Verstellbarkeit wenigstens eines Polarisationsfilters, d. h. wenigstens des Filters zwischen dem zu beobachtenden Gefäß und der Beobachtungseinrichtung einerseits und demjenigen vor der Beleuchtungseinrichtung andererseits. Auf diese Weise kann eine Grundeinstellung vorgenommen werden, in der von der Beleuchtungseinrichtung verursachtes Reflexlicht möglichst weitgehend ausgelöscht wird und nur diffuse Lichtanteile in die Beobachtungseinrichtung gelangen.

Bevorzugt ist eine Vielzahl von Beleuchtungseinrichtungen vorgesehen, die so bezüglich dem zu untersuchenden Gefäß angeordnet sind, dass der zu untersuchende Abschnitt des Gefäßes voll umfänglich beleuchtet wird. Besonders bevorzugt ist eine Vielzahl von Beleuchtungseinrichtungen im Wesentlichen gleichmäßig um den Umfang des zu untersuchenden Gefäßes verteilt.

Bei einer weiteren vorteilhaften Ausführungsform ist die von der Beleuchtungseinrichtung abgegebene Strahlung aus einer Gruppe von Strahlungen ausgewählt, welche infrarotes Licht, ultraviolettes Licht, sichtbares Licht, Kombinationen hieraus und dergleichen enthält. Besonders bevorzugt wird als Strahlung sichtbares Licht gewählt. Dabei ist es auch möglich, dass die Beleuchtungseinrichtung Weißlicht abgibt, oder Licht in unterschiedlichen Farben. Auf diese Weise kann die Vorrichtung an unterschiedliche Farben der Gefäße und oder deren Inhalte angepasst werden.

Bei einer weiteren bevorzugten Ausführungsform sind zwei Beobachtungseinrichtungen vorgesehen und die Transporteinrichtung ist zwischen diesen Beobachtungseinrichtungen angeordnet. Auf diese Weise ist es möglich, die Flasche im Wesentlichen voll umfänglich zu beobachten. Daher kann unabhängig von der zufallsbedingten Position des Bügelverschlusses in Umfangrichtung dieser von wenigstens einer Beobachtungseinrichtung abgebildet werden.

Bei einer weiteren bevorzugten Ausführungsform weist die Vorrichtung ein Spiegelsystem auf, welches bewirkt, dass die Flaschen von jeder Beobachtungseinrichtung aus wenigstens zwei umfänglich unterschiedlichen Richtungen beobachtet werden können. Auch auf diese Weise wird erreicht, dass eine Beobachtung der Flaschen aus mehreren unterschiedlichen Richtungen möglich ist und damit kann eine Anpassung an die Position des Flaschenverschlusses erfolgen.

Die vorliegende Erfindung ist weiterhin auf ein Verfahren zum Inspizieren von Gefäßen gerichtet. Dabei wird in einem ersten Verfahrensschritt Strahlung auf wenigstens ein zu inspizierendes Gefäß ausgegeben. In einem weiteren Verfahrensschritt wird das bestrahlte Gefäß mit wenigstens einer Beobachtungseinrichtung beobachtet.

Erfindungsgemäß wird die Beobachtungseinrichtung wenigstens auf einen oberen Bereich des Gefäßes gerichtet und der von dem Gefäß zu der Beobachtungseinrichtung gelangende Strahlengang verläuft wenigstens abschnittsweise in einer Ebene, die zu einer Längsrichtung des Gefäßes im Wesentlichen senkrecht steht. Vorzugsweise wird das Gefäß aus mehreren Richtungen und besonders bevorzugt mit mehreren Beobachtungseinrichtungen beobachtet. Vorzugsweise wird das Gefäß mittels einer Ausrichteinrichtung gegenüber seinem Gefäßverschluss bewegt.

Vorteilhaft ist die annähernd senkrecht zur Verschlussdichtfläche mögliche Abbildung ohne nennenswerte Verzerrung der Konturen.

Weitere Vorteile und Ausführungsformen der vorliegenden Erfindung ergeben sich aus den beigefügten Zeichnungen.

Darin zeigen:
- Fig. 1:: Eine Inspektionsvorrichtung in einer schematischen Draufsicht, und
- Fig. 2:: Eine Detailansicht einer erfindungsgemäßen Transporteinrichtung.

Das Bezugszeichen 1 bezieht sich auf eine wesentlich geradlinig verlaufende Transporteinrichtung, die hier als Förderband ausgeführt ist. Auf dieser Transporteinrichtung 1 befinden sich die zu untersuchenden Gefäße 8, d. h. die Flaschen, mit an diesen angeordneten (nur schematisch gezeigten) Bügelverschlüssen 9. Diese Bügelverschlüsse 9 sind in Umfangsrichtung der Flaschen 8 willkürlich angeordnet und weisen Dichtgummis 9a auf. Die jeweiligen Gefäße bzw. Flaschen 8 werden in einer einspurigen Reihe kontinuierlich gefördert.

Seitlich bzw. oberhalb der Transporteinrichtung 1 ist eine im Folgenden auch als Kamera bezeichnete Beobachtungseinrichtung 3a mit einem Objektiv 4a vorgesehen und vor dem Objektiv 4a ist ein lineares Polarisationsfilter 5a angeordnet. Unterhalb der Transporteinrichtung 1 befindet sich eine entsprechende Anordnung mit einer Kamera 3b, einem Objektiv 4b und einem Polarisationsfilter 5b.

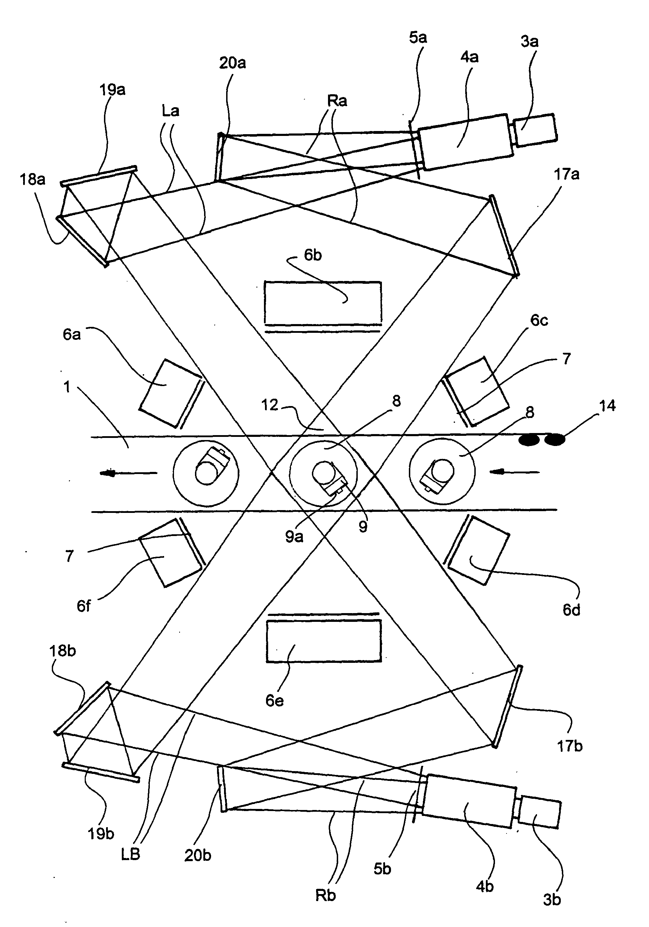

Die Bezugszeichen La, Ra, Lb und Rb beziehen sich auf linke und rechte Strahlengänge, die jeweils von dem Gefäß 8 zu den Kameras 3a und 3b führen. Der untere linke Strahlengang Lb verläuft dabei ausgehend von dem Gefäß 8 über einen ersten Spiegel 18b sowie einen zweiten Spiegel 19b in Richtung der Kamera 3b. Die Spiegel 18b und 19b sind dabei vertikal auf einer (nicht gezeigten) Grundplatte stehend angeordnet. Die entsprechenden oberen Spiegel 18a und 19a befinden sich in Fig. 1 oberhalb der Transporteinrichtung 1 und bewirken, dass in dem oberen Teil der Strahlengang von dem Gefäß 8 in Richtung der oberen Kamera 3a verläuft. In entsprechender Weise gelangt der untere Strahlengang Rb von dem Gefäß 8 über die Spiegel 17b und 20b ebenfalls in Richtung der Kamera 3b und oberhalb der Transporteinrichtung 1 über die Spiegel 17a und 20a auf die Kamera 3a. Die jeweiligen Strahlengänge La, Lb, Ra und Rb schneiden sich mit den optischen Achsen in etwa mittig über der Transporteinrichtung 1 und bilden dabei einen vorgegebenen gemeinsamen Winkel α. Dieser Winkel liegt bei den in Fig. 1 gezeigten Ausführungsformen etwa bei 75°. Auch bilden die Strahlengänge La, Lb, Ra und Rb eine Inspektionszone 12, innerhalb der die Flaschenhälse bzw. die Gefäßverschlüsse beobachtet werden können.

Bevorzugt ist die Länge der Strahlengänge La, Lb, Ra und Rb, ausgehend vom Schnittpunkt der optischen Achsen bis zu den Kameras 3a, 3b, in etwa gleichlang, um gleichgroße Abbildungen zu erhalten. Es wäre jedoch auch möglich, durch geeignete Beugungsmittel wie Linsen, eine gleiche Abbildungsgröße auch bei unterschiedlichen Längen der Strahlengänge La, Lb und Ra, Rb zu erreichen.

Die Höhenposition der Kameras 3a und 3b ist so gewählt, dass sie zumindest auch obere Bereiche, wie beispielsweise den Flaschenhals des Gefäßes abbildet.

Um die Gefäße 8 sind in Umfangsrichtung im Wesentlichen gleichmäßig Beleuchtungseinrichtungen 6a - 6f verteilt. Diese Beleuchtungseinrichtungen weisen dabei eine in der Längsrichtung der Gefäße lang gestreckte Gestalt auf, um zumindest die Flaschenhälse der Gefäße vollständig beleuchten zu können. Daneben dient die lang gestreckte Gestalt auch dazu, Flaschen unterschiedlicher Höhe beleuchten zu können.

Bei der in Fig. 1 gezeigten Ausführungsform sind die jeweiligen Beleuchtungseinrichtungen 6a - 6f jeweils zwischen den Strahlengängen La, Lb, Ra und Rb und der Transporteinrichtung 1 angeordnet. Auf diese Weise wird erreicht, dass keine Kamera direkt von einer Beleuchtungseinrichtung beleuchtet wird. Zu diesem Zweck sind die Kameras 3a, 3b auch so ausgerichtet, dass ihre Beobachtungsrichtung im Wesentlichen parallel zu der Transportrichtung der Flaschen verläuft. Die vier Beleuchtungseinrichtungen 6a, 6c, 6d und 6f sind bezüglich der Transporteinrichtung 1 so angeordnet, dass sie mit dieser, bezogen auf die Flasche 8, einen spitzen Winkel einschließen. Auf diese Weise ist es möglich, die Flaschen 8 sowohl von einer im Wesentlichen rückwärtigen Seite der Transporteinrichtung 1 als auch von vorne zu beleuchten. Daneben könnten weitere (nicht gezeigte) Beleuchtungseinrichtungen in Fig. 1 oberhalb der Transporteinrichtung 1 angeordnet sein.

Als Beleuchtungseinrichtung wird vorzugsweise eine Leuchtdioden-Blitzbeleuchtung gewählt. Für derartige Beleuchtungen ist üblicherweise keine Kühlung erforderlich und sie weisen eine zufrieden stellende Lebensdauer auf.

Die Flaschen werden auf der Transporteinrichtung mit einer Geschwindigkeit zwischen 7.000 und 72.000 Gefäßen pro Stunde gefördert. Aus dieser Förderleistung ergibt sich auch die Blitzfrequenz, mit der die einzelnen Gefäße beleuchtet werden. Dabei wird jedes Gefäß, sobald es sich in der Inspektionszone 12 befindet durch einen Blitz beleuchtet und gleichzeitig von den Kameras 3a und 3b ein Bild aufgenommen. Damit ergibt sich eine Blitzfrequenz zwischen 2 Hz und 20 Hz.

Anstelle der gleichzeitigen Aufnahme der Bilder durch die beiden Kameras 3a und 3b, ist es auch möglich, unmittelbar aufeinander folgende, d. h. zeitversetzte Aufnahmen einer Flasche durchzuführen. Zu diesem Zweck können auch unterschiedliche Beleuchtungseinrichtungen für die jeweiligen Aufnahmen aktiviert werden. Dies ist insbesondere dann interessant, wenn in beiden Aufnahmen eine unterschiedliche Beleuchtung der Gefäße erfolgen soll, beispielsweise eine Beleuchtung, die an die Farbe der Gefäße oder deren Inhalt angepasst ist.

Auch wäre es möglich, jede Flasche mit beiden Kameras je zweimal aufzunehmen und dabei bei der ersten Aufnahme bevorzugt den jeweils linken Strahlengang La, Lb und anschließend den jeweils rechten Strahlengang Ra, Rb zu beobachten. Dies könnte dadurch erreicht werden, dass bei der ersten Aufnahme nur die Beleuchtungseinrichtungen 6a, 6b, 6e und 6f und bei der zweiten Aufnahme nur die Beleuchtungseinrichtungen 6b, 6c, 6d und 6e aktiviert werden. Auch wäre es möglich, bei einzelnen Aufnahmen gewisse Strahlengänge zu blockieren, was beispielsweise durch (nicht gezeigte) Shutter oder schaltbare Spiegel möglich ist.

Bei der in Fig. 1 gezeigten Ausführungsform weisen die beiden weiteren Beleuchtungseinrichtungen 6e und 6f eine jeweils verdoppelte Lichtaustrittsfläche auf. Dies ist jedoch nicht zwingend erforderlich, sondern es könnten auch im Wesentlichen gleichartige Beleuchtungseinrichtungen 6a - 6f gewählt werden. Vor den jeweiligen Beleuchtungseinrichtungen 6a - 6f sind bevorzugt lineare Polarisationsfilter 7 vorgesehen, die in ihrer Polarisationsrichtung hier im Wesentlichen rechtwinklig zur Längsachse der Flaschen ausgerichtet ist. Die oben erwähnten Polarisationsfilter 5a und 5b vor den Kameras 3a und 3b sind in ihrer Polarisationsrichtung im Wesentlichen rechtwinklig zu der Polarisationsrichtung der Polarisationsfilter 7 angeordnet.

Damit sind die Polarisationsrichtungen der Polarisationsfilter 5a, 5b und 7 im Wesentlichen gekreuzt.

Durch diese gekreuzte Anordnung wird eine direkte Lichteinstrahlung von den einen Kameras gegenüberliegenden Beleuchtungseinrichtung unterdrückt. Auch können reflektierte Lichtanteile, die von eventuellen Flaschenetiketten stammen, auf diese Weise unterdrückt werden.

Die Kameras 3a und 3b weisen bevorzugt CCD-Chips auf, welche eine ortsaufgelöste Auflösung der auftreffenden Strahlung erlauben.

Die jeweiligen Polarisationsfilter 5a, 5b und 7 sind vorzugsweise sowohl in ihrer Drehstellung und auch in ihrer Neigung zu der Transporteinrichtung bzw. der Förderebene einstellbar. Auf diese Weise können die Polarisationsfilter 5a, 5b und 7 so aufeinander eingestellt werden, dass direkt auf die Kamera treffendes Licht bestmöglich unterdrückt wird, wobei diese Einstellung separat für alle Beleuchtungseinrichtungen 6a- 6f erfolgen kann.

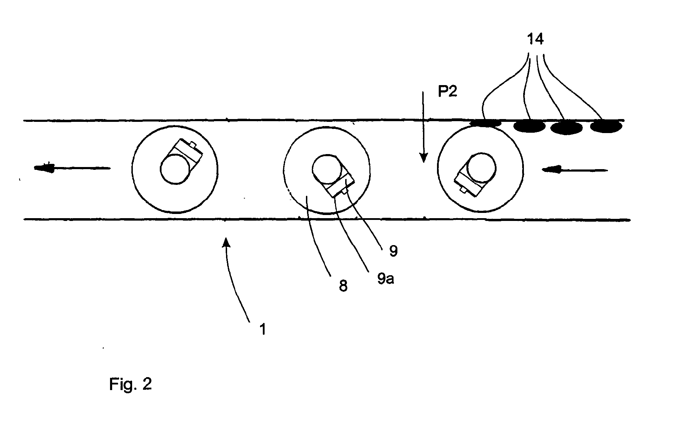

Fig. 2 zeigt eine Teilansicht einer erfindungsgemäßen Transporteinrichtung 1. Diese weist bei der in Fig. 2 gezeigten Ausführungsform (nicht im Detail gezeigte) an einem Seitenabschnitt angeordnete Stoßkörper 14 auf, welche die Gefäße, d. h. die Flaschen, in Richtung des Pfeils P2 stoßen können. Auf diese Weise werden die Flaschen 8 bewegt und der Kopf des Bügelverschlusses zumindest kurzzeitig von der Flasche weggeschleudert. Dieses kurzzeitige Wegschleudern genügt, dass sich der Keramikkopf beim Zurückfallen an den Flaschenhals anlegen kann. Auf diese Weise wird erreicht, dass die Gummiabdichtung im Wesentlichen radial mach außen weisend positioniert ist und damit in einfacher Weise von den Beobachtungseinrichtungen 3a und 3b beobachtet werden kann. Damit stellen die Stoßkörper bei dieser Ausführungsform die oben beschriebene Ausrichteinrichtung 14 dar.

Anstelle der hier gezeigten Stoßkörper 14 könnten jedoch auch unterhalb des Transportbandes bzw. der Flaschen Stoßeinrichtungen vorgesehen sein, welche die Flasche in Ihrer Längsrichtung stoßen. Auch auf diese Weise kann ein kurzzeitiges Abheben des Kopfes des Bügelverschlusses von der Flasche und damit die oben beschriebene Ausrichtung erreicht werden.

Daneben könnten auch Ausrichtseinrichtungen vorgesehen sein, die nicht auf die Flasche, sondern auf deren Verschluss einwirken. Dabei könnte es sich beispielsweise um oberhalb des Transportbandes angeordnete Magnete handeln, die ebenfalls kurzzeitig den Metallbügel anheben und auf diese Weise eine Ausrichtung des Kopfes erreichen. Auch wäre es möglich, Luftdüsen vorzusehen, die wenigstens an einer und bevorzugt an mehreren Stellen in Umfangsrichtung um das Gefäß verteilt sind und auf diese Weise ein kurzzeitiges Anheben des Bügelverschlusses erreichen.

Nachdem die einzelnen Bügelverschlüsse mit dem Dichtgummi radial nach außen weisend ausgerichtet sind, können sie mit den jeweiligen Beobachtungseinrichtungen 3a und 3b aufgenommen werden. Anhand der aufgenommenen Bilder ist es möglich, festzustellen, ob der jeweilige Flaschenverschluss noch intakt ist, also insbesondere, ob der Dichtgummi verschmutzt oder beschädigt ist. Auch kann festgestellt werden, ob der Keramikkörper des Bügelverschlusses noch intakt ist. Flaschen mit nicht brauchbaren Verschlüssen können durch eine ansteuerbare Separierrichtung ausgeschieden werden.

Schließlich kann festgestellt werden, ob einzelne Verschlüsse trotz der Ausrichteinrichtungen 14 noch nicht in der gewünschten Weise an dem Flaschenhals anliegen. Sobald dies gemeldet wird, kann die entsprechende Flasche mit einer Aussortiereinheit aussortiert und dem Inspektionsprozess erneut zugeführt werden.

Die entsprechenden aufgenommenen Bilddaten der Verschlüsse können unmittelbar zur Kontrolle an Bedienpersonal beispielsweise über einen Monitor ausgegeben werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Transporteinrichtung
- 3a, 3b: Beobachtungseinrichtung
- 4a, 4b: Objektiv
- 5a, 5b: Polarisationsfilter
- 6a - 6f: Beleuchtungseinrichtung
- 7: Polarisationsfilter
- 8: Gefäße, Flaschen
- 9: Flaschenverschlüsse
- 9a: Dichtgummi
- 12: Inspektionszone
- 14: Ausrichteinrichtung
- 18a, 19a: Spiegel im Strahlengang La
- 18b, 19b: Spiegel im Strahlengang Lb
- 17a, 20a: Spiegel im Strahlengang Ra
- 17b, 20b: Spiegel im Strahlengang Rb
- La, Lb, Ra, Rb: Strahlengang
- P2: Pfeil

## Patentansprüche

1. Vorrichtung zum Inspizieren von Gefäßen (8), insbesondere von Flaschenverschlüssen (9), mit wenigstens einer Beleuchtungseinrichtung (6a, 6b, 6c, 6d, 6e, 6f), die Strahlung auf ein zu inspizierendes Gefäß (8) ausgibt und wenigstens einer Beobachtungseinrichtung (3a, 3b), die wenigstens einen Bereich des zu untersuchenden Gefäßes (8) abbildet, **dadurch gekennzeichnet, dass** die Beobachtungseinrichtung (3a , 3b) zumindest auf einen oberen Bereich des Gefäßes (8) gerichtet ist und ein Strahlengang (La, Lb, Ra, Rb) der von dem Gefäß (8) zu der Beobachtungseinrichtung (3a, 3b) gelangenden Strahlung wenigstens abschnittsweise in einer Ebene verläuft, die zu einer Längsrichtung des Gefäßes (8) im Wesentlichen senkrecht steht.

2. Vorrichtung nach Anspruch 1 **dadurch gekennzeichnet, dass** die Transporteinrichtung (1) vorgesehen ist, welche die Gefäße gegenüber der Beobachtungseinrichtung (3a, 3b) bewegt.

3. Vorrichtung nach Anspruch 2 **dadurch gekennzeichnet, dass** die Transporteinrichtung (1) die Gefäße (8) im Wesentlichen geradlinig bewegt.

4. Vorrichtung nach wenigstens einem der vorangegangenen Ansprüche, **dadurch gekennzeichnet, dass** eine Ausrichteinrichtung (14) vorgesehen ist, welche die Gefäßverschlüsse (9) gegenüber den zugehörigen Gefäßen (8) bewegt.

5. Vorrichtung nach Anspruch 4, **dadurch gekennzeichnet, dass** die Ausrichteinrichtung (14) die Gefäße (8) bewegt.

6. Vorrichtung nach wenigstens einem der vorangegangenen Ansprüche 4 - 5, **dadurch gekennzeichnet, dass** die Ausrichteinrichtung (14) die Gefäße (8) im Wesentlichen in einer Richtung bewegt, die senkrecht zu der Längsrichtung des Gefäßes (8) steht.

7. Vorrichtung nach wenigstens einem der vorangegangenen Ansprüche, **dadurch gekennzeichnet, dass** die Ausrichteinrichtung (14) den Gefäßverschluss (9) bewegt.

8. Vorrichtung nach wenigstens einem der vorangegangenen Ansprüche, **dadurch gekennzeichnet, dass** eine Vielzahl von Beleuchtungseinrichtungen (6a, 6b, 6c, 6d, 6e, 6f) vorgesehen ist, die so angeordnet sind, dass wenigstens ein oberer Abschnitt des Gefäßes (8) im Wesentlichen voll umfänglich beleuchtet wird.

9. Vorrichtung nach wenigstens einem der vorangegangenen Ansprüche, **dadurch gekennzeichnet, dass** in dem Strahlengang (La, Lb, Ra, Rb) zwischen dem Gefäß (8) und der Beobachtungseinrichtung (3a, 3b) wenigstens ein Polarisationsfilter (5a, 5b) angeordnet ist.

10. Vorrichtung nach wenigstens einem der vorangegangenen Ansprüche, **dadurch gekennzeichnet, dass** wenigstens eine Beleuchtungseinrichtung (6a, 6b, 6c, 6d, 6e, 6f) polarisiertes Licht und bevorzugt linear polarisiertes Licht abstrahlt.

11. Vorrichtung nach wenigstens einem der vorangegangenen Ansprüche, **dadurch gekennzeichnet, dass** in dem Strahlengang (La, Lb, Ra, Rb) zwischen wenigstens einer Beleuchtungseinrichtung (6a, 6b, 6c, 6d, 6e, 6f) und den Gefäßen (8) ein Polarisationsfilter (7) vorgesehen ist.

12. Vorrichtung nach Anspruch 1, **dadurch gekennzeichnet, dass** die Strahlung aus einer Gruppe von Strahlungen ausgewählt ist, welche IR - Licht, UV - Licht, sichtbares Licht, Kombinationen hieraus und dergleichen enthält.

13. Vorrichtung nach wenigstens einem der vorangegangenen Ansprüche, **dadurch gekennzeichnet, dass** zwei Beobachtungseinrichtungen (3a, 3b) vorgesehen sind und die Transporteinrichtung (1) zwischen diesen zwei Beobachtungseinrichtungen (3a, 3b) angeordnet ist.

14. Vorrichtung nach wenigstens einem der vorangegangenen Ansprüche, **dadurch gekennzeichnet, dass** die Vorrichtung ein Spiegelsystem (17a, 18a, 19a, 20a, 17b, 18b, 19b, 20b) aufweist, welches bewirkt, dass die Gefäße von jeder Beobachtungseinrichtung (3a, 3b) aus wenigstens zwei unterschiedlichen Richtungen beobachtet werden können.

15. Verfahren zum Inspizieren von Gefäßen (8), insbesondere von Flaschenverschlüssen (9) mit den Schritten:
- Einstrahlen von Strahlung auf ein zu untersuchendes Gefäß (8);
- Beobachten des bestrahlten Gefäßes (8) mit
wenigstens einer Beobachtungseinrichtung (3a, 3b); **dadurch gekennzeichnet, dass** die Beobachtungseinrichtung (3a, 3b) wenigstens auf einen oberen Bereich des Gefäßes (8) gerichtet wird und der von dem Gefäß (8) zu der Beobachtungseinrichtung (3a, 3b) gelangende Strahlengang (La, Lb, Ra, Rb) wenigstens abschnittsweise in einer Ebene verläuft, die zu einer Längsrichtung des Gefäßes (8) im Wesentlichen senkrecht steht.

16. Verfahren nach Anspruch 15, **dadurch gekennzeichnet, dass** das Gefäß (8) aus mehreren Richtungen beobachtet wird.

17. Verfahren nach wenigstens einem der vorangegangenen Ansprüche 15 - 16 **dadurch gekennzeichnet, dass** das Gefäß (8) mit einer Ausrichteinrichtung (14) gegenüber seinem Gefäßverschluss (9) bewegt wird.
